# EUROPÄISCHE PATENTSCHRIFT

(11) **EP 3 019 375 B1**
(45) Veröffentlichungstag und Bekanntmachung des Hinweises auf die Patenterteilung: **17.05.2017**
(21) Anmeldenummer: 14728455.8
(22) Anmeldetag: 04.06.2014
(51) Int. Cl.: B60W 30/16, B60W 10/06, B60W 10/184, B60W 10/196, B60W 40/076

(54) **VERFAHREN UND VORRICHTUNG ZUR AUTOMATISCHEN REGELUNG EINER LÄNGSDYNAMIK EINES KRAFTFAHRZEUGS**
METHOD AND DEVICE FOR AUTOMATIC LONGITUDINAL DYNAMICS CONTROL OF A MOTOR VEHICLE
PROCÉDÉ ET DISPOSITIF DE RÉGULATION AUTOMATIQUE D'UNE DYNAMIQUE LONGITUDINALE D'UN VÉHICULE À MOTEUR

(30) Priorität: 12.07.2013 DE 102013011624
(43) Veröffentlichungstag der Anmeldung: 18.05.2016
(73) Patentinhaber: WABCO GmbH, 30453 Hannover (DE)
(72) Erfinder: BAUM, Mathias, 30455 Hannover (DE); BREUER, Karsten, 88179 Oberreute (DE); KALLENBACH, Stephan, 30161 Hannover (DE)
(74) Vertreter: Lauerwald, Jörg
(86) Internationale Anmeldenummer: PCT/EP2014/001516
(87) Internationale Veröffentlichungsnummer: WO 2015/003766

(56) Entgegenhaltungen:
- EP-A2- 1 053 903
- DE-A1- 4 209 060
- DE-A1-102004 013 655
- US-A1- 2011 276 246
- US-A1- 2012 065 863

## Beschreibung

Die Erfindung betrifft ein Verfahren zur automatischen Regelung einer Längsdynamik eines Kraftfahrzeugs, insbesondere eines Nutzfahrzeugs, mit den Schritten Ermitteln einer von dem Zustand mindestens einer Radbremse abhängigen ersten Zustandsgröße, Erfassen von Grenzwertüber- und/oder - unterschreitungen der ersten Zustandsgröße, Ermitteln von Informationen über ein vorausfahrendes Fahrzeug, Einstellen mindestens eines Regelungsparameters der Regelung und Regeln der Längsdynamik des Fahrzeugs in Abhängigkeit von dem mindestens einen Regelungsparameter.

Ferner betrifft die Erfindung eine Vorrichtung zur Regelung einer Längsdynamik eines Kraftfahrzeugs, insbesondere eines Nutzfahrzeugs, mit mindestens einer ersten Sensiereinrichtung zum Ermitteln des Zustands mindestens einer Radbremse, einer zweiten Sensiereinrichtung zum Ermitteln von Informationen über ein vorausfahrendes Fahrzeug und einer Auswertungs-, Einstell- und Regeleinheit zum Auswerten des Zustands der mindestens einen Radbremse und der Informationen über das vorausfahrende Fahrzeug, Einstellen mindestens eines Regelungsparameters und Regeln der Längsdynamik des Fahrzeugs in Abhängigkeit des mindestens einen Regelungsparameters.

Derartige Verfahren und Vorrichtungen werden insbesondere bei Nutzfahrzeugen für Abstands- bzw. Geschwindigkeitsregelungen verwendet, welche in Abhängigkeit von dem vorausfahrenden Fahrzeug einen Geschwindigkeits- oder Beschleunigungswert einstellen. Diese Regelungssysteme werden auch als Abstandsregeltempomaten oder Automatische Distanzregler (ADR) bezeichnet, wobei sich auch der Ausdruck Adaptive Cruise Control (ACC) für solche Regelung durchgesetzt hat.

Adaptive Abstands- bzw. Geschwindigkeitsregelsysteme sind in der Lage auf das Bremssystem und/oder das Motormanagement zuzugreifen, sodass durch Beschleunigen und/oder Abbremsen des Fahrzeugs ein gewünschter Soll-Abstand zu dem vorausfahrenden Fahrzeug automatisch eingeregelt werden kann. Somit wird die allgemeine Fahrsicherheit durch Einhaltung einer ausreichenden Distanz zu dem vorausfahrenden Fahrzeug erhöht und der Bremsverschleiß und damit auch die Fahrzeugausfallzeiten reduziert.

Derartige Regelsysteme sind insbesondere dann vorteilhaft, wenn monotone Fahrmanöver über einen längeren Zeitraum hinweg ausgeführt werden müssen, welche zur Ermüdung und somit zu einer reduzierten Reaktionsfähigkeit des Fahrzeugführers führen können. Monotone und ermüdende Fahrmanöver sind häufig bei Transportfahrten mit Nutzfahrzeugen oder beim Führen von Stadtoder Reisebussen auszuführen.

DE 10 2010 055 373 A1 beschreibt ein Verfahren zur Regelung einer Längsdynamik eines Kraftfahrzeugs gemäß einer oben beschriebenen adaptiven Abstands- bzw. Geschwindigkeitsregelung. Die gattungsgemäße DE42 09 060 A1 betrifft ein Verfahren zur Regelung des Abstands zwischen fahrenden Fahrzeugen, welches unabhängig von der Art der Abstandserfassung ist. Dabei werden die im Verlaufe einer aktuell aufrechterhaltenen Abstandsregelung erfolgenden Fahrereingriffe erfasst und bewertet. Dazu werden im Zuge des normalen Fährbetriebs betätigte Steuermittel wie zum Beispiel das Gaspedal, das Bremspedal und der Blinker überwacht. Aus einer Bewertung festgestellter Betätigungen wird auf den aktuellen Fahrerwunsch geschlossen und dementsprechend die in den aktuell errechneten Sollabstand eingehende Reaktionszeit des Fahrers adaptiv korrigiert. Dadurch werden Totzeiten minimiert und eine schnellstmögliche Anpassung des Folgeabstands an ein wechselndes Fahrverhalten des Fahrers erreicht.

Es hat sich herausgestellt, dass das längsdynamische Verhalten eines ACCgeregelten Kraftfahrzeugs stark von Umgebungseinflüssen, wie beispielsweise der Straßenneigung oder den Windverhältnissen, abhängig ist. So ist bei den bekannten Regelungssystemen zu beobachten, dass während der Folgefahrt in der Ebene ein hoher Fahrkomfort gewährleistet und der gewünschte Folgeabstand zum vorausfahrenden Fahrzeug in zufriedenstellender Weise eingehalten werden kann.

Erfährt das Fahrzeug infolge der Straßenneigung während einer Bergabfahrt jedoch eine zusätzliche, nicht vom Antriebsmoment des Motors abhängige Beschleunigung, kann die Regelung den hohen Fahrkomfort nicht mehr aufrechterhalten und/oder der eingestellte bzw. gewünschte Abstand zu dem vorausfahrenden Fahrzeug wird häufig stark unterschritten. Aus der Unterschreitung des gewünschten Folgeabstandes resultiert ein plötzlicher und starker Bremseingriff des Regelsystems oder der Fahrer fühlt sich durch subjektives Empfinden genötigt, selbst bremsend einzugreifen, wodurch der Komfort weiter reduziert wird. Folglich lassen sich bekannte Systeme auch so einstellen, dass zwar ein hoher Fahrkomfort während der Neigungsfahrt gewährleistet ist, dieser aber während der Fahrt in der Ebene nicht aufrechterhalten werden kann.

Eine adaptive und unter wirtschaftlichen Aspekten umsetzbare Abstands- bzw. Geschwindigkeitsregelung, welche hohen Komfort und ausreichende Folgeabstände sowohl bei der Fahrt in der Ebene als auch während der Bergabfahrt gewährleistet, ist nicht bekannt.

Aufgabe der vorliegenden Erfindung ist es folglich, ein Verfahren und eine Vorrichtung anzugeben, welche das Vorhandensein von Umgebungseinflüssen, die die Regelung beeinflussen, erfasst und die Regelung an diese Umgebungseinflüsse anpasst, um einen hohen Komfort und ausreichende Folgeabstände während der Folgefahrt unabhängig von den Umgebungseinflüssen zu gewährleisten.

Die Aufgabe wird in einem ersten Aspekt durch ein Verfahren der eingangs genannten Art gelöst, wobei das Einstellen des mindestens einen Regelungsparameters der Regelung von einem Erfassen einer Anzahl von Grenzwertüberund/oder -unterschreitungen der ersten Zustandsgröße innerhalb eines definierten Zeitraums und von den ermittelten Informationen über das vorausfahrende Fahrzeug abhängig ist.

Die Erfindung macht sich die Erkenntnis zunutze, dass es während längerer Neigungsfahrten bzw. Bergabfahrten unter Verwendung von Längsdynamik Regelungen zu einem charakteristischen Bremsverhalten kommt. Wird das Fahrzeug aufgrund der Bergabfahrt zusätzlich beschleunigt, sodass der Abstand zu dem vorausfahrenden Fahrzeug ungewöhnlich stark reduziert wird, kommt es wenige Sekunden lang zu einem starken Abbremsen des Fahrzeugs. Dieser starken ersten Abbremsung folgt eine Phase, in welcher das Fahrzeug, gegebenenfalls unter Einsatz von Dauerbremsen, frei rollt. Während des freien Rollens des Fahrzeugs kommt es aufgrund der durch die Neigung der Fahrbahn hervorgerufenen zusätzlichen Fahrzeugbeschleunigung zu einem ungewöhnlich schnellen aufschließen zu dem vorausfahrenden Fahrzeug, woraus in einem nächsten Schritt wieder ein starkes Abbremsen des Fahrzeugs resultiert. Führen die von der Regelung ausgelösten Bremsmanöver zu einer Anzahl von Grenzwertüberund/oder -unterschreitungen der ersten Zustandsgröße, so wird erkannt, dass auf das Fahrzeug Umgebungseinflüsse einwirken, welche zu einer zusätzlichen Beschleunigung des Fahrzeugs führen.

Mit den Informationen über das vorausfahrende Fahrzeug kann ferner ermittelt werden, ob der Abstand zu dem vorausfahrenden Fahrzeug erhöht oder reduziert werden muss, um den eingestellten Soll-Abstand zu dem vorausfahrenden Fahrzeug zu erreichen. Wenn äußere Einflüsse auf das Fahrzeug wirken, welche zu einer Beschleunigung des Fahrzeugs führen und gleichzeitig mittels der Informationen über das vorausfahrende fahrende Fahrzeug ermittelt wird, dass der Abstand zu dem vorausfahrenden Fahrzeug erhöht werden muss, kann auf diese Situation mit einem Einstellen bzw. Anpassen des Regelungsparameters der Regelung reagiert werden, damit das Regelungsverhalten nicht negativ von den äußeren Einflüssen auf das Fahrzeug beeinflusst wird. In Abhängigkeit des auf die äußeren Einflüsse abgestimmten Regelungsparameters kann somit die Längsdynamik des Fahrzeugs geregelt werden.

In einer ersten bevorzugten Ausführungsform des erfindungsgemäßen Verfahrens ist das Einstellen des mindestens einen Regelungsparameters der Regelung von dem Erfassen von zwei, drei, vier oder fünf Grenzwertüber- und/oder - unterschreitungen der ersten Zustandsgröße innerhalb eines Zeitraums zwischen 15 und 120 Sekunden und von den ermittelten Informationen über das vorausfahrende Fahrzeug abhängig. In einer besonders bevorzugten Ausführungsform ist das Einstellen des Regelungsparameters von dem Erfassen von drei Grenzwertüberschreitungen der ersten Zustandsgröße innerhalb eines Zeitraums von 60 Sekunden oder eines Zeitraums von weniger als 60 Sekunden und von den ermittelten Informationen über das vorausfahrende Fahrzeug abhängig.

Insbesondere kann davon ausgegangen werden, dass bei drei Grenzwertüberschreitungen der ersten Zustandsgröße innerhalb von 60 Sekunden oder weniger als 60 Sekunden Umwelteinflüsse auf das Fahrzeug wirken, welche zu einer zusätzlichen Beschleunigung des Fahrzeugs führen, sodass eine Anpassung des Regelungsparameters und somit der Regelung an die Umwelteinflüsse vorgenommen werden muss, damit der Fahrkomfort weiter gewährleistet werden kann und der Abstand zu dem vorausfahrenden Fahrzeug in zufriedenstellender Weise eingehalten werden kann.

In einer weiteren bevorzugten Ausführungsform des erfindungsgemäßen Verfahrens erfolgt das Erfassen von einer Anzahl von Grenzwertüber- und/oder - unterschreitungen der ersten Zustandsgröße innerhalb des definierten Zeitraums mittels einer Auswertung einer gespeicherten Historie der ersten Zustandsgröße. Die gespeicherte Historie beinhaltet den zeitlichen Verlauf der ersten Zustandsgröße. Die Historie bzw. Verlauf der ersten Zustandsgröße kann beispielsweise mit einer Auswertungsroutine derart abgefragt werden, dass das Vorliegen einer Anzahl von Grenzwertüber- und/oder -unterschreitungen der ersten Zustandsgröße innerhalb des definierten Zeitraums detektiert werden kann.

In einer weiteren bevorzugten Ausführungsform des erfindungsgemäßen Verfahrens erfolgt das Erfassen von einer Anzahl von Grenzwertüber- und/oder - unterschreitungen der ersten Zustandsgröße innerhalb des definierten Zeitraums mittels einer Zähleinheit. Die Zähleinheit generiert bei Erreichen einer Anzahl von Grenzwertüber- und/oder -unterschreitungen der ersten Zustandsgröße innerhalb des definierten Zeitraums ein Signal und/oder setzt sich auf null zurück, wenn keine Grenzwertüber- und/oder -unterschreitung der ersten Zustandsgröße innerhalb eines definierten Zeitraums nach einer vorhergehenden Grenzwertüber- und/oder-unterschreitung der ersten Zustandsgröße erfolgt. Die Verwendung einer Zähleinheit vereinfacht das Verfahren weiter, da die Aufzeichnung und Speicherung der Historie bzw. des Verlaufs der ersten Zustandsgröße nicht notwendig ist.

Eine weitere bevorzugte Ausführungsform des erfindungsgemäßen Verfahrens beinhaltet die Schritte Erfassen mindestens eines Zeitraums zwischen Grenzwertüber- und/oder-unterschreitungen der ersten Zustandsgröße, vorzugsweise zwischen zwei, drei, vier oder fünf Grenzwertüber- und/oder -unterschreitungen der ersten Zustandsgröße und Ermitteln von Überschreitungen einer definierten Grenzzeit des Zeitraums oder der Zeiträume zwischen den Grenzwertüberund/oder -unterschreitungen der ersten Zustandsgröße. Das Einstellen des Regelungsparameters der Regelung ist in dieser Ausführungsform des Verfahrens auch von den Überschreitungen der definierten Grenzzeit des Zeitraums oder der Zeiträume zwischen den Grenzwertüber- und/oder-unterschreitungen der ersten Zustandsgröße abhängig. Längsdynamikregelsysteme, welche in der Lage sind auf das Bremssystem des Fahrzeugs zu zugreifen, streben die Einhaltung einer Grenzzeit zwischen der Einleitung von Bremsmanövern an, um Fading, also die Beeinträchtigung der Bremsleistung aufgrund unzureichender Kühlung, zu verhindern.

Das erfindungsgemäße Verfahren wird dadurch vorteilhaft weitergebildet, dass das Ermitteln von Informationen über das vorausfahrende Fahrzeug das Ermitteln der Geschwindigkeit und/oder der Beschleunigung des vorausfahrenden Fahrzeugs und/oder das Ermitteln des Ist-Abstands zu dem vorausfahrenden Fahrzeug beinhaltet. Insbesondere werden zur Ermittlung von Informationen über das vorausfahrende Fahrzeug Radarsensoren oder Lidar-Systeme eingesetzt. Es kommen allerdings auch weitere auf der Laufzeitmessung beruhende Sensortypen für die Ermittlung von Informationen über das vorausfahrende Fahrzeug in Betracht.

In einer weiteren bevorzugten Ausführungsform des erfindungsgemäßen Verfahrens beinhaltet das Ermitteln der von dem Zustand mindestens einer Radbremse abhängigen ersten Zustandsgröße das Ermitteln eines Bremsdrucks, eines Bremsmoments, einer Bremskraft, der Fahrzeugbeschleunigung und/oder der Fahrzeuggeschwindigkeit. Alternativ kann die erste Zustandsgröße der Bremsdruck, das Bremsmoment, die Bremskraft, die Fahrzeugbeschleunigung und/oder die Fahrzeuggeschwindigkeit selbst sein.

Die von dem Zustand der mindestens einen Radbremse abhängigen ersten Zustandsgröße kann beispielsweise auch durch Integration oder Differenzieren einer direkt ermittelten Größe ermittelt werden. Auf diese Weise können auch Rückschlüsse über den zeitlichen Verlauf der ermittelten Größe gezogen werden, beispielsweise durch einen Bremsdruckgradienten, einen Bremskraftgradienten, einen Gradienten der Fahrzeugbeschleunigung und/oder einen Gradienten der Fahrzeuggeschwindigkeit.

Eine weitere vorteilhafte Ausführungsform des erfindungsgemäßen Verfahrens beinhaltet den Schritt Ableiten von Informationen über den Neigungszustand des Fahrzeugs in Abhängigkeit der ersten Zustandsgröße. Besonders bevorzugt ist ein Verfahren, bei dem das Ableiten von Informationen über den Neigungszustand des Fahrzeugs in Abhängigkeit der Grenzwertüber- und/oder - unterschreitungen der ersten Zustandsgröße und der Überschreitungen der definierten Grenzzeit des Zeitraums oder der Zeiträume zwischen den Grenzwertüber- und/oder-unterschreitungen der ersten Zustandsgröße erfolgt. Dabei kann auf Grundlage der ersten Zustandsgröße entweder darauf geschlossen werden, dass ein bestimmter Neigungsgrenzwert der Fahrbahn oder des Fahrzeugs überschritten wurde oder mittels einer Berechnungsmethode der exakte momentane Neigungswert der Fahrbahn und/oder des Fahrzeugs ermittelt werden.

In einer weiteren Ausführungsform des erfindungsgemäßen Verfahrens beinhaltet das Regeln der Längsdynamik des Fahrzeugs in Abhängigkeit von dem Regelungsparameter das Beschleunigen und/oder Abbremsen des Fahrzeugs. Dies bedeutet, dass die Regelung auf das Bremssystem des Fahrzeugs sowie auf das Motormanagement zugreifen kann, um situationsabhängig ein zusätzliches Brems- und/oder Antriebsmoment zu erzeugen.

In einer weiteren vorteilhaften Ausführungsform beinhaltet das erfindungsgemäße Verfahren die Schritte Definieren eines Soll-Abstandes zu dem vorausfahrenden Fahrzeug, Ermitteln eines Ist-Abstandes zu dem vorausfahrenden Fahrzeug und Vergleichen des ermittelten Ist-Abstandes zu dem vorausfahrenden Fahrzeug mit dem definierten Soll-Abstand zu dem vorausfahrenden Fahrzeug 108.

Das erfindungsgemäße Verfahren wird dadurch vorteilhaft weitergebildet, dass sich der Regelungsparameter in Abhängigkeit von den ermittelten Informationen über das vorausfahrende Fahrzeug und dem Erfassen von einer Anzahl von Grenzwertüber- und/oder -unterschreitungen der ersten Zustandsgröße innerhalb des definierten Zeitraums und/oder den Überschreitungen der definierten Grenzzeit des Zeitraums oder der Zeiträume zwischen den Grenzwertüberund/oder -unterschreitungen der ersten Zustandsgröße vergrößert und/oder verkleinert. Die Vergrößerung oder Verkleinerung des Regelungsparameters ist vorzugsweise unabhängig von der Höhe der Grenzwertüber- und/oder - unterschreitungen der ersten Zustandsgröße und/oder der Überschreitungen der definierten Grenzzeit, sondern vergrößert oder verkleinert sich solange die Grenzwertüber- und/oder -unterschreitungen der ersten Zustandsgröße und/oder die Überschreitungen der definierten Grenzzeit vorliegen.

Das erfindungsgemäße Verfahren wird dadurch in vorteilhafter Weise weitergebildet, dass der Regelungsparameter einen Maximalwert nicht überschreitet und einen Minimalwert nicht unterschreitet. Vorzugsweise bleibt der Regelungsparameter beim Erreichen des Maximalwertes oder des Minimalwertes konstant, wenn der Soll-Abstand zu dem vorausfahrenden Fahrzeug größer als der Ist-Abstand zu dem vorausfahrenden Fahrzeug ist und eine Anzahl von Grenzwertüber- und/oder -unterschreitungen der ersten Zustandsgröße innerhalb des definierten Zeitraums erfasst wird und/oder Überschreitungen der definierten Grenzzeit des Zeitraums oder der Zeiträume zwischen den einzelnen Grenzwertüber- und/oder -unterschreitungen der ersten Zustandsgröße vorliegen. Durch die Beschränkung des Regelungsparameters auf einen definierten Wertebereich wird beispielsweise verhindert, dass die Regelung während einer andauernden Bergabfahrt extrem verhärtet, da der die Regelung beeinflussende Regelungsparameter auf einen extrem großen Wert angewachsen ist.

In einer besonders bevorzugten Ausführungsform des erfindungsgemäßen Verfahrens vergrößert und/oder verkleinert sich der Regelungsparameter linear, nicht linear und/oder nach einer definierten Funktion, wenn der Soll-Abstand größer als der Ist-Abstand zu dem vorausfahrenden Fahrzeug ist und die Anzahl von Grenzwertüber- und/oder -unterschreitungen der ersten Zustandsgröße innerhalb des definierten Zeitraums erfasst wird und/oder Überschreitungen der definierten Grenzzeit des Zeitraums oder der Zeiträume zwischen den einzelnen Grenzwertüber- und/oder -unterschreitungen der ersten Zustandsgröße vorliegen. Die Ermittlung des Reglungsparameters erfolgt also nicht in Abhängigkeit der Höhe der Grenzwertüber- und/oder -unterschreitungen der ersten Zustandsgröße und/oder der Höhe der Überschreitungen der definierten Grenzzeit des Zeitraums oder der Zeiträume zwischen den einzelnen Grenzwertüber- und/oder -unterschreitungen der ersten Zustandsgröße. Vielmehr wächst der Regelungsparameter gemäß einer der oben bezeichneten Funktionen mit andauerndem vorliegenden einer Anzahl von Grenzwertüber- und/oder -unterschreitungen der ersten Zustandsgröße und/oder andauernden Überschreitungen der definierten Grenzzeit des Zeitraums oder der Zeiträume zwischen den einzelnen Grenzwertüber- und/oder -unterschreitungen der ersten Zustandsgröße an oder fällt mit diesen ab, wenn der Soll-Abstand zu dem vorausfahrenden Fahrzeug größer ist als der Ist-Abstand zu dem vorausfahrenden Fahrzeug.

In einer weiteren Ausführungsform des erfindungsgemäßen Verfahrens ist der Regelungsparameter der Regelung ein Verstärkungsfaktor. Das erfindungsgemäße Verfahren beinhaltet zusätzlich die Schritte Ermitteln einer Geschwindigkeitsdifferenz zu dem vorausfahrenden Fahrzeug und Ermitteln einer Soll-Beschleunigung des Fahrzeugs in Abhängigkeit der ermittelten Geschwindigkeitsdifferenz zu dem vorausfahrenden Fahrzeug und dem eingestellten Verstärkungsfaktor. Die Soll-Beschleunigung ist dabei von einer verstärkten Geschwindigkeitsdifferenz zu dem vorausfahrenden Fahrzeug abhängig, wobei die Verstärkung der Geschwindigkeitsdifferenz zu dem vorausfahrenden Fahrzeug von dem Verstärkungsfaktor abhängt und/oder die Soll-Beschleunigung eine Funktion der ermittelten Geschwindigkeitsdifferenz und des Verstärkungsfaktors ist. So kann es beispielsweise vorkommen, dass der Verstärkungsfaktor während der Fahrt in einer Ebene konstant ist und sich während einer Bergabfahrt und/oder während einer Neigungsfahrt verändert, vorzugsweise sich mit andauernder Bergabfahrt und/oder Neigungsfahrt bis zu einem Maximalwert vergrößert. Sollte eine der Grenzwertüber- und/oder -unterschreitungen nicht mehr vorliegen, kann der Verstärkungsfaktor entweder direkt auf den konstanten Wert zurückgesetzt werden oder stetig oder gemäß einer Funktion auf diesen abgesenkt werden.

Eine weitere Ausführungsform des erfindungsgemäßen Verfahrens umfasst den Schritt Ermittlung der momentanen Fahrzeugmasse. Besonders bevorzugt ist das Einstellen des mindestens einen Regelungsparameters der Regelung auch abhängig von der Fahrzeugmasse. Insbesondere kann die Fahrzeugmasse einen Einfluss auf die definierten Grenzwerte haben, deren Über- und/oder Unterschreitungen mittels des Verfahrens erfasst werden können. Somit kann gewährleistet werden, dass das Verfahren zur Regelung verschiedener Fahrzeugtypen verwendet werden kann. Beispielweise kann die Regelung durch die Berücksichtigung der Fahrzeugmasse auf den aktuellen Beladungszustand reagieren.

Die der Erfindung zugrunde liegende Aufgabe wird in einem zweiten Aspekt mit einer Vorrichtung der eingangs genannten Art gelöst, wobei die Auswertungs-, Einstell- und Regeleinheit ausgebildet ist, um abhängig von einer Anzahl von Grenzwertüber- und/oder-unterschreitungen der ersten Zustandsgröße innerhalb eines definierten Zeitraums und den ermittelten Informationen über das vorausfahrende Fahrzeug den mindestens einen Regelungsparameter einzustellen.

Die erste Sensiereinrichtung zum Ermitteln des Zustands der mindestens einen Radbremse kann beispielsweise ein auf Dehnungsmessstreifen basierender oder ein anderer Momentenaufnehmer, ein Beschleunigungs- oder Geschwindigkeitssensor, ein Bremsdrucksensor oder ein Drehzahlsensor sein. Als zweite Sensiereinrichtung finden besonders bevorzugt Radar- und Lidar-Systeme, Photomischdetektoren (PMD-Sensoren) oder Ultraschallsysteme Anwendung.

Die erfindungsgemäße Vorrichtung wird dadurch vorteilhaft weitergebildet, dass die Auswertungs-, Einstell- und Regeleinheit eine Speichereinheit und/oder eine Zähleinheit umfasst, welche ausgebildet ist, um die Anzahl von Grenzwertüberund/oder -unterschreitungen der ersten Zustandsgröße innerhalb des definierten Zeitraums zu erfassen.

In einer weiteren bevorzugten Ausführungsform der erfindungsgemäßen Vorrichtung ist die Auswertungs-, Einstell- und Regeleinheit ausgebildet, um einen Zeitraum oder Zeiträume zwischen Grenzwertüber- und/oder -unterschreitungen der ersten Zustandsgröße, vorzugsweise zwischen zwei, drei, vier oder fünf Grenzwertüber- und/oder -unterschreitungen der ersten Zustandsgröße zu erfassen und/oder Überschreitungen einer definierten Grenzzeit des Zeitraums oder der Zeiträume zwischen den Grenzwertüber- und/oder -unterschreitungen der ersten Zustandsgröße zu ermitteln.

Die der Erfindung zugrunde liegende Aufgabe wird ferner durch ein Kraftfahrzeug mit einer Vorrichtung zur Regelung einer Längsdynamik gemäß einem der Ansprüche 13 bis 15 und/oder wobei die Vorrichtung zum Durchführen eines Verfahrens nach einem der Ansprüche 1 bis 12 eingerichtet, ausgelegt und/oder konstruiert ist, gelöst.

Die in der vorliegenden Beschreibung, in den Figuren sowie in den Ansprüchen offenbarten Merkmale der Erfindung können sowohl einzeln als auch in beliebiger Kombination für die Verwirklichung der Erfindung in ihren Ausführungsformen wesentlich sein.

Die Erfindung wird nachfolgend anhand von Figuren näher beschrieben, ohne dass diese den Schutzbereich der Schutzansprüche beschränken sollen. Es stellen dar:
- Fig. 1: ein längsdynamisch geregeltes Fahrzeug während einer Folgefahrt hinter einem vorausfahrenden Fahrzeug in der Ebene;
- Fig. 2: ein längsdynamisch geregeltes Fahrzeug während einer Folgefahrt hinter einem vorausfahrenden Fahrzeug auf einer Neigungsstrecke;
- Fig. 3: eine Ausführungsform der erfindungsgemäßen Vorrichtung in einer schematischen Darstellung;
- Fig. 4: ein Ablaufdiagramm einer Ausführungsform des erfindungsgemäßen Verfahrens zur automatischen Regelung einer Längsdynamik eines Kraftfahrzeugs; und
- Fig. 5: eine schematische Darstellung der Zustandsgrößen- und Regelungsparameterveränderungen aufgetragen über die Zeit.

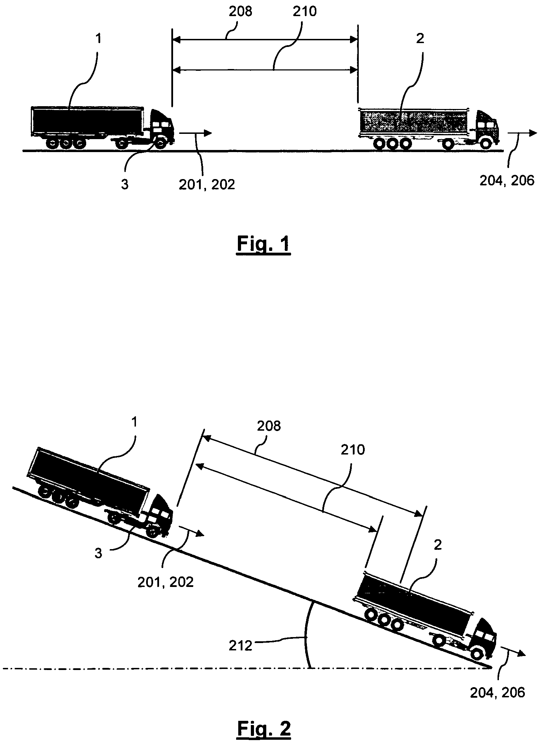

Fig. 1 zeigt eine Folgefahrt eines längsdynamisch geregelten Kraftfahrzeugs 1 hinter einem vorausfahrenden Fahrzeug 2 in der Ebene. Das Kraftfahrzeug 1 bewegt sich mit einer Geschwindigkeit 201 sowie einer Beschleunigung 202 hinter dem vorausfahrenden Fahrzeug 2, welches sich mit einer Geschwindigkeit 204 und einer Beschleunigung 206 bewegt. Das Kraftfahrzeug 1 weist eine Vorrichtung 3 zur Regelung einer Längsdynamik des Fahrzeugs 1 auf, welche in Abhängigkeit einer Anzahl von Grenzwertüber- und/oder -unterschreitungen des Zustandes der Radbremsen innerhalb eines definierten Zeitraums und der ermittelten Informationen über das vorausfahrende Fahrzeug das Fahrzeug 1 beschleunigen und abbremsen kann. Während der dargestellten Fahrt in der Ebene wirken keine Umgebungseinflüsse auf das Fahrzeug 1, welche eine Anpassung der auf eine Fahrt in der Ebene abgestimmten Regelung notwendig machen würden.. Die Regelung ist während der Fahrt in der Ebene in der Lage einen hohen Regelungskomfort zu gewährleisten und gleichzeitig den gewünschten Soll-Abstand 208 zu dem vorausfahrenden Fahrzeug 2 mit einer zufriedenstellenden Toleranz einzuhalten, sodass der Ist-Abstand 210 zu dem vorausfahrenden Fahrzeug 2 im Wesentlichen dem eingestellten Soll-Abstand 208 zu dem vorausfahrenden Fahrzeug 2 entspricht.

Durch die in Fig. 2 dargestellte Neigungsfahrt des Fahrzeugs 1 auf einer um den Winkel 212 geneigten Fahrbahn, kommt es zu einer zusätzlichen Beschleunigung des Fahrzeugs 1, welche nicht durch das Antriebsmoment des Motors hervorgerufen wird. Die Beschleunigung 202 sowie die Geschwindigkeit 201 des Fahrzeugs 1 werden folglich erhöht. Bleibt die Geschwindigkeit 204 und/oder die Beschleunigung 206 des vorausfahrenden Fahrzeugs 2 konstant, wird der eingestellte Soll-Abstand 208 zu dem vorausfahrenden Fahrzeug 2 nicht mehr eingehalten. Folglich ist der Ist-Abstand 210 zu dem vorausfahrenden Fahrzeug 2 kleiner als der eingestellte Soll-Abstand 208 zu dem vorausfahrenden Fahrzeug 2. Werden beispielsweise drei Grenzwertüberschreitungen des Zustandes der Radbremsen innerhalb von 60 Sekunden festgestellt, besteht die Notwendigkeit die Regelung an die Umgebungseinflüsse anzupassen. Dies geschieht durch die Einstellung des Regelungsparameters in Abhängigkeit der drei Grenzwertüberschreitungen innerhalb von 60 Sekunden und der Informationen über das vorausfahrende Fahrzeug 2.

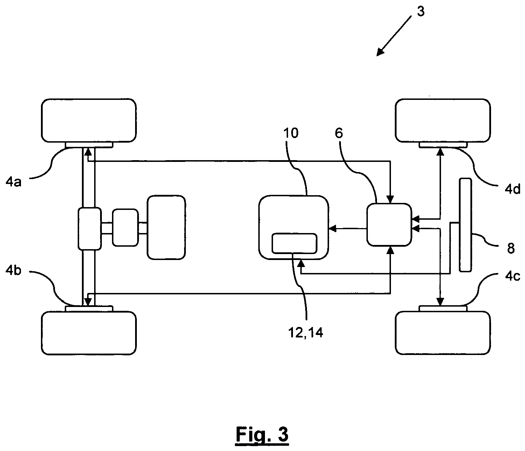

Gemäß Fig. 3 umfasst die Vorrichtung zur Regelung der Längsdynamik des Fahrzeugs 3 eine erste Sensiereinrichtung 6 zum Ermitteln des Zustandes der vier Radbremsen 4a, 4b, 4c, 4d, eine zweite Sensiereinrichtung 8 zum Ermitteln von Informationen über ein vorausfahrendes Fahrzeug und eine Auswertungs-, Einstell- und Regeleinheit 10 zum Auswerten des Zustandes der vier Radbremsen 4a, 4b, 4c, 4d und der Informationen über das vorausfahrende Fahrzeug, Einstellen mindestens eines Regelungsparameters und Regeln der Längsdynamik des Fahrzeugs in Abhängigkeit des mindestens ein Regelungsparameters auf.

Die Auswertungs-, Einstell- und Regeleinheit 10 ist ausgebildet, um abhängig von drei Grenzwertüberschreitungen des Zustandes der vier Radbremsen 4a, 4b, 4c, 4d innerhalb von 60 Sekunden und den ermittelten Informationen über das vorausfahrende Fahrzeug 2 einen Regelungsparameter einzustellen. Ferner weist die Auswertungs-, Einstell- und Regeleinheit 10 eine Speichereinheit 12 auf, um eine Anzahl der Grenzwertüberschreitungen des Zustands der Radbremsen 4a, 4b, 4c, 4d innerhalb von 60 Sekunden zu erfassen. Alternativ könnte das Fahrzeug 1 jedoch auch eine Zähleinheit 14 aufweisen, welche ebenfalls die Anzahl der Grenzwertüberschreitungen des Zustands der Radbremsen 4a, 4b, 4c, 4d innerhalb von 60 Sekunden erfassen kann. Ferner ist die Auswertungs-, Einstell- und Regeleinheit 10 ausgebildet, um Überschreitungen einer definierten Grenzzeit des Zeitraums oder der Zeiträume zwischen den Grenzwertüberschreitungen des Zustands der Radbremsen 4a, 4b, 4c, 4d zu ermitteln.

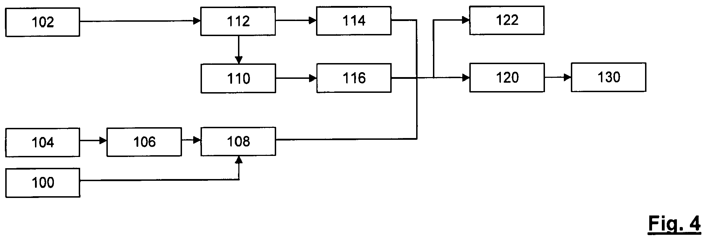

Fig. 4 zeigt ein Ablaufdiagramm für das Verfahren zur automatischen Regelung einer Längsdynamik eines Kraftfahrzeugs. Das gezeigte erfindungsgemäße Verfahren beinhaltet die Schritte Ermitteln einer von dem Zustand mindestens einer Radbremse abhängigen ersten Zustandsgröße 102, Erfassen von Grenzwertüber- und/oder -unterschreitungen der ersten Zustandsgröße 112 und Erfassen von einer Anzahl von Grenzwertüber- und/oder -unterschreitungen der ersten Zustandsgröße innerhalb eines definierten Zeitraums 114.

Ferner beinhaltet das gezeigte Verfahren die Schritte Erfassen mindestens eines Zeitraums zwischen den Grenzwertüber- und/oder -unterschreitungen der ersten Zustandsgröße, vorzugsweise zwischen zwei, drei, vier oder fünf Grenzwertüberund/oder -unterschreitungen der ersten Zustandsgröße 110. Auf Grundlage des ermittelten Zeitraums bzw. der ermittelten Zeiträume zwischen den einzelnen Grenzwertüber- und/oder-unterschreitungen der ersten Zustandsgröße kann nun im Schritt Ermitteln von Überschreitungen einer definierten Grenzzeit des Zeitraums bzw. der Zeiträume zwischen den einzelnen Grenzwertüber- und/oder -unterschreitungen der ersten Zustandsgröße 116 ermittelt werden, ob die Grenzwertüber- und/oder -unterschreitungen der ersten Zustandsgröße derart schnell aufeinanderfolgen, dass davon ausgegangen werden kann, dass die zur Vermeidung von Fading notwendige Abkühlzeit des Bremssystems unterschritten wurde.

Das gezeigte Verfahren umfasst weiter die Schritte Ermitteln von Informationen über ein vorausfahrendes Fahrzeug 104 und Ermitteln eines Ist-Abstandes zu dem vorausfahrenden Fahrzeug 106. Ein durch den Schritt Definieren eines Soll-Abstandes zu dem vorausfahrenden Fahrzeug 100 definierter Soll-Abstand zu dem vorausfahrenden Fahrzeug wird im Schritt Vergleichen des ermittelten Ist-Abstandes zu dem vorausfahrenden Fahrzeug mit dem definierten Soll-Abstand zu dem vorausfahrenden Fahrzeug 110 mit dem Ist-Abstand zu dem vorausfahrenden Fahrzeug vergleichen.

Das Verfahren beinhaltet ferner den Schritt Einstellen des mindestens einen Regelungsparameters der Regelung 120 in Abhängigkeit von einer Anzahl von Grenzwertüber- und/oder -unterschreitungen der ersten Zustandsgröße innerhalb eines definierten Zeitraums und in Abhängigkeit von den Überschreitungen der definierten Grenzzeit des Zeitraums bzw. der Zeiträume zwischen den einzelnen Grenzwertüber- und/oder -unterschreitungen der ersten Zustandsgröße.

Ferner beinhaltet das Verfahren den Schritt Ableiten von Informationen über den Neigungszustand des Fahrzeugs in Abhängigkeit der ersten Zustandsgröße, insbesondere in Abhängigkeit der Grenzwertüber- und/oder -unterschreitungen der ersten Zustandsgröße und/oder der Überschreitungen der definierten Grenzzeit des Zeitraums bzw. der Zeiträume zwischen den Grenzwertüber- und/oder - unterschreitungen der ersten Zustandsgröße 122. Nachdem der Regelungsparameter eingestellt wurde, kann der Schritt Regeln der Längsdynamik des Fahrzeugs in Abhängigkeit von dem Regelungsparameter 130 ausgeführt werden.

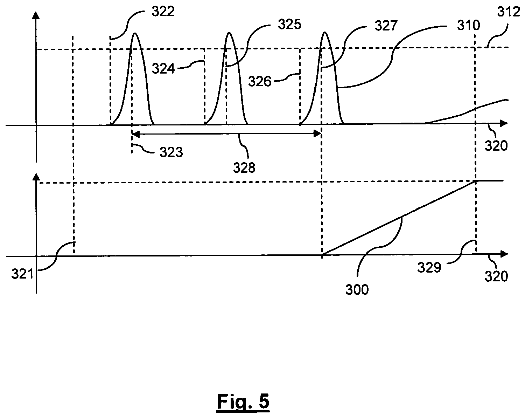

Fig. 5 zeigt die Veränderungen des Regelungsparameters 300 und der von dem Zustand der vier Radbremsen abhängigen ersten Zustandsgröße 310, aufgetragen über die Zeit 320. Zu dem Zeitpunkt 321 befährt das Fahrzeug eine geneigte Fahrbahn. Durch die Neigung der Fahrbahn erfährt das Fahrzeug eine zusätzliche Beschleunigung, welche unabhängig von dem Antriebsmoment des Motors ist. Aufgrund der zusätzlichen Beschleunigung verringert sich der Ist-Abstand zu dem vorausfahrenden Fahrzeug. Zu dem Zeitpunkt 322 greift die automatische Längsdynamikregelung ein und verzögert durch Betätigen der Radbremsen das Fahrzeug derart, dass sich der Ist-Abstand zu dem vorausfahrenden Fahrzeug wieder vergrößert. Aufgrund des nun ausreichenden Ist-Abstandes zu dem vorausfahrenden Fahrzeug wird der Bremseingriff wieder aufgehoben, sodass das Fahrzeug wieder zu dem vorausfahrenden Fahrzeug aufschließt. Zu den Zeitpunkten 324 und 326 werden die Radbremsen erneut betätigt, um den Abstand zu dem vorausfahrenden Fahrzeug zu vergrößern. Während den drei Bremsmanövern, welche zu den Zeitpunkten 322, 324 und 326 initiiert wurden, kommt jeweils zu einer Grenzwertüberschreitung des Grenzwertes 312 der ersten Zustandsgröße 310. Die Grenzwertüberschreitungen finden zu den drei Zeitpunkten 323, 325 und 327 statt. Der Zeitraum 328 zwischen der ersten Grenzwertüberschreitung und der dritten Grenzwertüberschreitung beträgt in der zu Grunde liegenden Fahrsituation unter 60 Sekunden. Aufgrund des schnelles Aufeinanderfolgens der drei Grenzwertüberschreitungen ist die Regelung in der Lage zu erfassen, dass Umwelteinflüsse vorliegen (hier Fahrbahnneigung), welche zu einer zusätzlichen Beschleunigung des Fahrzeugs führen. Wenn die Differenz zwischen dem Soll-Abstand zu dem vorausfahrenden Fahrzeug und dem Ist-Abstand zu dem vorausfahrenden Fahrzeug nun einen definierten Grenzwert überschreitet, besteht die Notwendigkeit, die Regelung auf die herrschenden Umwelteinflüsse anzupassen. Um die Regelung auf diese Umwelteinflüsse anzupassen, wird der Regelungsparameter 300 ab dem Zeitpunkt 327 konstant erhöht bis dieser zu dem Zeitpunkt 329 einen Grenzwert bzw. Maximalwert einnimmt. Der Maximalwert des Regelungsparameters 300 wird konstant gehalten, bis innerhalb eines definierten Zeitraums keine Grenzwertüberschreitungen der ersten Zustandsgröße 310 mehr auftreten. Werden innerhalb dieses Zeitraums keine Grenzwertüberschreitungen der ersten Zustandsgröße 310 erfasst, wird der Regelungsparameter 300 wieder linear abgesenkt.

### Bezugszeichenliste (Bestandteil der Beschreibung)

- 1: Kraftfahrzeug
- 2: vorausfahrendes Fahrzeug
- 3: Vorrichtung zur Reglung einer Längsdynamik
- 4a, 4b, 4c, 4d: Radbremsen
- 6: erste Sensiereinrichtung
- 8: zweite Sensiereinrichtung
- 10: Auswertungs-, Einstell- und Regeleinheit
- 12: Speichereinheit
- 14: Zähleinheit
- 100: Definieren eines Soll-Abstandes zu dem vorausfahrenden Fahrzeug
- 102: Ermitteln einer von dem Zustand mindestens einer Radbremse abhängigen ersten Zustandsgröße
- 104: Ermitteln von Informationen über ein vorausfahrendes Fahrzeug
- 106: Ermitteln eines Ist-Abstandes zu dem vorausfahrenden Fahrzeug
- 108: Vergleichen des ermittelten Ist-Abstandes zu dem vorausfahrenden Fahrzeug mit dem definierten Soll-Abstand zu dem vorausfahrenden Fahrzeug
- 110: Erfassen mindestens eines Zeitraums zwischen den Grenzwertüber- und/oder -unterschreitungen der ersten Zustandsgröße
- 112: Erfassen von Grenzwertüber- und/oder - unterschreitungen der ersten Zustandsgröße
- 114: Erfassen von einer Anzahl von Grenzwertüber- und/oder - unterschreitungen der ersten Zustandsgröße innerhalb eines definierten Zeitraums
- 116: Ermitteln von Überschreitungen einer definierten Grenzzeit des mindestens einen Zeitraums zwischen den einzelnen Grenzwertüber- und/oder -unterschreitungen der ersten Zustandsgröße
- 120: Einstellen mindestens eines Regelungsparameters der Regelung
- 122: Ableiten von Informationen über den Neigungszustand
- des: Fahrzeugs in Abhängigkeit der ersten Zustandsgröße
- 130: Regeln der Längsdynamik des Fahrzeugs in Abhängigkeit von dem mindestens einen Regelungsparameter
- 201: Geschwindigkeit des Fahrzeugs
- 202: Beschleunigung des Fahrzeugs
- 204: Geschwindigkeit des vorausfahrenden Fahrzeugs
- 206: Beschleunigung des vorausfahrenden Fahrzeugs
- 208: Soll-Abstand zu dem vorausfahrenden Fahrzeug
- 210: Ist-Abstand zu dem vorausfahrenden Fahrzeug
- 212: Neigungswinkel der Fahrbahn
- 300: Regelungsparameter
- 310: erste Zustandsgröße
- 312: Grenzwertes der ersten Zustandsgröße
- 320: Zeit
- 321-329: Zeitpunkte

## Patentansprüche

1. Verfahren zur automatischen Regelung einer Längsdynamik eines Kraftfahrzeugs, insbesondere eines Nutzfahrzeugs, mit den Schritten:
- Ermitteln einer von dem Zustand mindestens einer Radbremse abhängigen ersten Zustandsgröße (102);
- Erfassen von Grenzwertüber- und/oder -unterschreitungen der ersten Zustandsgröße (112);
- Ermitteln von Informationen über ein vorausfahrendes Fahrzeug (104);
- Einstellen mindestens eines Regelungsparameters der Regelung (120); und
- Regeln der Längsdynamik des Fahrzeugs in Abhängigkeit von dem mindestens einen Regelungsparameter (130);
und wobei das Einstellen des mindestens einen Regelungsparameters der Regelung (120) von einem Erfassen von einer Anzahl von Grenzwertüber- und/oder - unterschreitungen der ersten Zustandsgröße innerhalb eines definierten Zeitraums (114) und von den ermittelten Informationen über das vorausfahrende Fahrzeug abhängig ist.

2. Verfahren nach Anspruch 1,
**dadurch gekennzeichnet, dass** das Einstellen des mindestens einen Regelungsparameters der Regelung von dem Erfassen von 2, 3, 4 oder 5 Grenzwertüber- und/oder -unterschreitungen der ersten Zustandsgröße innerhalb eines Zeitraums zwischen 15 und 120 Sekunden, vorzugsweise 60 Sekunden oder weniger als 60 Sekunden, und von den ermittelten Informationen über das vorausfahrende Fahrzeug abhängig ist.

3. Verfahren nach einem der Ansprüche 1 oder 2,
**dadurch gekennzeichnet, dass** das Erfassen von einer Anzahl von Grenzwertüberund/oder -unterschreitungen der ersten Zustandsgröße innerhalb des definierten Zeitraums mittels einer Auswertung einer gespeicherten Historie der ersten Zustandsgröße erfolgt.

4. Verfahren nach einem der Ansprüche 1 oder 2,
**dadurch gekennzeichnet, dass** das Erfassen von einer Anzahl von Grenzwertüberund/oder -unterschreitungen der ersten Zustandsgröße innerhalb des definierten Zeitraums mittels einer Zähleinheit erfolgt, welche bei Erreichen der Anzahl von Grenzwertüber- und/oder -unterschreitungen der ersten Zustandsgröße innerhalb des definierten Zeitraums ein Signal generiert und/oder sich auf null zurücksetzt, wenn keine Grenzwertüber- und/oder -unterschreitungen der ersten Zustandsgröße innerhalb eines definierten Zeitraums nach einer vorherigen Grenzwertüberund/oder -unterschreitung der ersten Zustandsgröße erfolgt.

5. Verfahren nach einem der vorstehenden Ansprüche,
**gekennzeichnet durch** die Schritte:
- Erfassen mindestens eines Zeitraums zwischen einzelnen, vorzugsweise zwischen 2, 3, 4 oder 5 Grenzwertüber- und/oder -unterschreitungen der ersten Zustandsgröße (110); und
- Ermitteln von Überschreitungen einer definierten Grenzzeit des mindestens einen Zeitraums zwischen den einzelnen Grenzwertüber- und/oder - unterschreitungen der ersten Zustandsgröße (116);
wobei das Einstellen des mindestens einen Regelungsparameters der Regelung (120) auch von den Überschreitungen der definierten Grenzzeit des mindestens einen Zeitraums zwischen den Grenzwertüber- und/oder -unterschreitungen der ersten Zustandsgröße abhängig ist.

6. Verfahren nach einem der vorstehenden Ansprüche,
**dadurch gekennzeichnet, dass** das Ermitteln von Informationen über ein vorausfahrendes Fahrzeug das Ermitteln der Geschwindigkeit und/oder der Beschleunigung des vorausfahrenden Fahrzeugs und/oder das Ermitteln des Ist-Abstandes zum vorausfahrenden Fahrzeug beinhaltet.

7. Verfahren nach einem der vorstehenden Ansprüche,
**dadurch gekennzeichnet, dass** das Ermitteln der von dem Zustand mindestens einer Radbremse abhängigen ersten Zustandsgröße das Ermitteln eines Bremsdrucks, eines Bremsmoments, einer Bremskraft, einer Fahrzeugbeschleunigung und/oder einer Fahrzeuggeschwindigkeit umfasst und/oder die erste Zustandsgröße der Bremsdruck, das Bremsmoment, die Bremskraft, die Fahrzeuggeschwindigkeit und/oder die Fahrzeugbeschleunigung ist.

8. Verfahren nach einem der vorstehenden Ansprüche, insbesondere nach einem der Ansprüche 5 bis 7,
**gekennzeichnet durch** den Schritt:
- Ableiten von Informationen über den Neigungszustand des Fahrzeugs in Abhängigkeit der ersten Zustandsgröße, insbesondere in Abhängigkeit der Grenzwertüber- und/oder -unterschreitungen der ersten Zustandsgröße und/oder der Überschreitungen der definierten Grenzzeit der Zeiträume zwischen den einzelnen Grenzwertüber- und/oder -unterschreitungen der ersten Zustandsgröße (122).

9. Verfahren nach einem der vorstehenden Ansprüche,
**dadurch gekennzeichnet, dass** sich der Regelungsparameter in Abhängigkeit von den ermittelten Informationen über das vorausfahrende Fahrzeug und dem Erfassen von einer Anzahl von Grenzwertüber- und/oder -unterschreitungen der ersten Zustandsgröße innerhalb des definierten Zeitraums und/oder den Überschreitungen der definierten Grenzzeit der Zeiträume zwischen den einzelnen Grenzwertüberund/oder -unterschreitungen der ersten Zustandsgröße vergrößert und/oder verkleinert.

10. Verfahren nach Anspruch 9,
**dadurch gekennzeichnet, dass** der Regelungsparameter einem Maximalwert nicht überschreitet und/oder einen Minimalwert nicht unterschreitet und vorzugsweise bei Erreichen des Maximalwertes und/oder des Minimalwertes konstant bleibt, wenn der Soll-Abstand zu dem vorausfahrenden Fahrzeug größer als der Ist-Abstand zu dem vorausfahrenden Fahrzeug ist und eine Anzahl von Grenzwertüber- und/oder - unterschreitungen der ersten Zustandsgröße innerhalb eines definierten Zeitraums erfasst wird und/oder Überschreitungen der definierten Grenzzeit der Zeiträume zwischen den einzelnen Grenzwertüber- und/oder -unterschreitungen der ersten Zustandsgröße vorliegen.

11. Verfahren nach Anspruch 9 oder Anspruch 10,
**dadurch gekennzeichnet, dass** sich der Regelungsparameter linear, nicht-linear oder nach einer definierten Funktion vergrößert und/oder verkleinert, wenn eine Anzahl von Grenzwertüber- und/oder -unterschreitungen der ersten Zustandsgröße innerhalb des definierten Zeitraums erfasst wird und der Soll-Abstand zu dem vorausfahrenden Fahrzeug größer als der Ist-Abstand zu dem vorausfahrenden Fahrzeug ist und/oder Überschreitungen der definierten Grenzzeit der Zeiträume zwischen den einzelnen Grenzwertüber- und/oder -unterschreitungen der ersten Zustandsgröße vorliegen.

12. Verfahren nach einem der Ansprüche 9 bis 11,
wobei mindestens ein Regelungsparameter der Regelung ein Verstärkungsfaktor ist, mit den Schritten:
- Ermitteln einer Geschwindigkeitsdifferenz zu dem vorausfahrenden Fahrzeug,
- Einstellen des Verstärkungsfaktors; und
- Ermitteln einer Soll-Beschleunigung des Fahrzeugs in Abhängigkeit der ermittelten Geschwindigkeitsdifferenz zu dem vorausfahrenden Fahrzeug und dem eingestellten Verstärkungsfaktor;
wobei die Soll-Beschleunigung von einer verstärkten Geschwindigkeitsdifferenz zu dem vorausfahrenden Fahrzeug abhängt, wobei die Verstärkung der Geschwindigkeitsdifferenz zu dem vorausfahrenden Fahrzeug von dem Verstärkungsfaktor abhängt und/oder die Soll-Beschleunigung eine Funktion der ermittelten Geschwindigkeitsdifferenz und dem Verstärkungsfaktor ist.

13. Vorrichtung (3) zur Regelung einer Längsdynamik eines Kraftfahrzeugs (1), insbesondere eines Nutzfahrzeugs, mit
mindestens einer ersten Sensiereinrichtung (6) zum Ermitteln des Zustands mindestens einer Radbremse (4a, 4b, 4c, 4d);
einer zweiten Sensiereinrichtung (8) zum Ermitteln von Informationen über ein vorausfahrendes Fahrzeug (2), und
einer Auswertungs-, Einstell- und Regeleinheit (10) zum Auswerten des Zustandes der mindestens einen Radbremse (4a, 4b, 4c, 4d) und der Informationen über das vorausfahrende Fahrzeug (2), Einstellen mindestens eines Regelungsparameters und Regeln der Längsdynamik des Fahrzeugs (1) in Abhängigkeit des mindestens einen Regelungsparameters,
und wobei die Auswertungs-, Einstell- und Regeleinheit (10) ausgebildet ist, um abhängig von einer Anzahl von Grenzwertüber- und/oder -unterschreitungen des Zustands mindestens einer Radbremse (4a, 4b, 4c, 4d) innerhalb eines definierten Zeitraums und den ermittelten Informationen über das vorausfahrende Fahrzeug (2) den mindestens einen Regelungsparameter einzustellen.

14. Vorrichtung (3) nach Anspruch 13,
**dadurch gekennzeichnet, dass** die Auswertungs-, Einstell- und Regeleinheit (10) eine Speichereinheit (12) und/oder eine Zähleinheit (14) umfasst, welche ausgebildet ist, um eine Anzahl von Grenzwertüber- und/oder -unterschreitungen des Zustands der Radbremse (4a, 4b, 4c, 4d) innerhalb des definierten Zeitraums zu erfassen.

15. Vorrichtung (3) nach Anspruch 14,
**dadurch gekennzeichnet, dass** die Auswertungs-, Einstell- und Regeleinheit (10) ausgebildet ist, um einen Zeitraum zwischen einzelnen, vorzugsweise zwischen 2, 3, 4 oder 5 Grenzwertüber- und/oder -unterschreitungen des Zustands der Radbremse (4a, 4b, 4c, 4d)zu erfassen und Überschreitungen einer definierten Grenzzeit des Zeitraums zwischen einzelnen Grenzwertüber- und/oder -unterschreitungen des Zustands der Radbremse (4a, 4b, 4c, 4d)zu ermitteln.

16. Kraftfahrzeug (1) mit einer Vorrichtung (3) zur Regelung einer Längsdynamik gemäß einem der Ansprüche 13 bis 15 und/oder wobei die Vorrichtung zum Durchführen eines Verfahrens nach einem der Ansprüche 1 bis 12 eingerichtet, ausgelegt und/oder konstruiert ist.

## Claims

1. Method for automatic control of longitudinal dynamics of a motor vehicle, in particular a commercial vehicle, with the following steps:
- ascertaining (102) a first state variable dependent on the state of at least one wheel brake;
- detecting (112) overshoots and/or undershoots of a limiting value of the first state variable;
- ascertaining (104) information about a vehicle traveling ahead;
- setting (120) at least one control parameter of the feedback control system;
and
- controlling (130) the longitudinal dynamics of the vehicle as a function of the at least one control parameter;
and wherein the setting (120) of the at least one control parameter of the feedback control system is dependent on a detection (114) of a number of overshoots and/or undershoots of a limiting value of the first state variable within a defined period and on the ascertained information about the vehicle traveling ahead.

2. Method according to Claim 1,
**characterized in that** the setting of the at least one control parameter of the feedback control system is dependent on the detecting of 2, 3, 4 or 5 overshoots and/or undershoots of a limiting value of the first state variable within a period between 15 seconds and 120 seconds, preferentially 60 seconds or less than 60 seconds, and on the ascertained information about the vehicle traveling ahead.

3. Method according to one of Claims 1 or 2,
**characterized in that** the detecting of a number of overshoots and/or undershoots of a limiting value of the first state variable within the defined period is undertaken by means of an evaluation of a stored history of the first state variable.

4. Method according to one of Claims 1 or 2,
**characterized in that** the detecting of a number of overshoots and/or undershoots of a limiting value of the first state variable within the defined period is undertaken by means of a counting unit which, upon reaching the number of overshoots and/or undershoots of a limiting value of the first state variable within the defined period, generates a signal and/or resets itself to zero if no overshoot and/or undershoot of a limiting value of the first state variable occurs within a defined period after a previous overshoot and/or undershoot of a limiting value of the first state variable.

5. Method according to one of the preceding claims,
**characterized by** the following steps:
- detecting (110) at least one period between individual, preferentially between 2, 3, 4 or 5, overshoots and/or undershoots of a limiting value of the first state variable; and
- ascertaining (116) overshoots of a defined time limit of the at least one period between the individual overshoots and/or undershoots of a limiting value of the first state variable;
wherein the setting (120) of the at least one control parameter of the feedback control system is also dependent on the overshoots of the defined time limit of the at least one period between the overshoots and/or undershoots of a limiting value of the first state variable.

6. Method according to one of the preceding claims,
**characterized in that** the ascertaining of information about a vehicle traveling ahead includes the ascertaining of the speed and/or the acceleration of the vehicle traveling ahead.and/or the ascertaining of the actual spacing from the vehicle traveling ahead.

7. Method according to one of the preceding claims,
**characterized in that** the ascertaining of the first state variable dependent on the state of at least one wheel brake includes the ascertaining of a brake pressure, of a braking torque, of a braking force, of an acceleration of the vehicle and/or a speed of the vehicle, and/or the first state variable is the brake pressure, the braking torque, the braking force, the speed of the vehicle and/or the acceleration of the vehicle.

8. Method according to one of the preceding claims, in particular according to one of Claims 5 to 7, **characterized by** the following step:
- deriving (122) information about the inclination state of the vehicle as a function of the first state variable, in particular as a function of the overshoots and/or undershoots of a limiting value of the first state variable and/or as a function of the overshoots of the defined time limit of the periods between the individual overshoots and/or undershoots of a limiting value of the first state variable.

9. Method according to one of the preceding claims,
**characterized in that** the control parameter increases and/or decreases as a function of the ascertained information about the vehicle traveling ahead and as a function of the detecting of a number of overshoots and/or undershoots of a limiting value of the first state variable within the defined period and/or as a function of the overshoots of the defined time limit of the periods between individual overshoots and/or undershoots of a limiting value of the first state variable.

10. Method according to Claim 9,
**characterized in that** the control parameter does not exceed a maximum value and/or does not fall below a minimum value and preferentially remains constant upon reaching the maximum value and/or the minimum value if the target spacing from the vehicle traveling ahead is greater than the actual spacing from the vehicle traveling ahead, and a number of overshoots and/or undershoots of a limiting value of the first state variable within a defined period are detected, and/or overshoots of the defined time limit of the periods between the individual overshoots and/or undershoots of a limiting value of the first state variable are present.

11. Method according to Claim 9 or Claim 10,
**characterized in that** the control parameter increases and/or decreases linearly, non-linearly or in accordance with a defined function if a number of overshoots and/or undershoots of a limiting value of the first state variable within the defined period are detected and the desired spacing from the vehicle traveling ahead is greater than the actual spacing from the vehicle traveling ahead, and/or overshoots of the defined time limit of the periods between the individual overshoots and/or undershoots of a limiting value of the first state variable are present.

12. Method according to one of Claims 9 to 11,
wherein at least one control parameter of the feedback control system is an amplification factor, with the following steps:
- ascertaining a difference in speed with respect to the vehicle traveling ahead,
- setting the amplification factor; and
- ascertaining a target acceleration of the vehicle as a function of the ascertained difference in speed with respect to the vehicle traveling ahead and the set amplification factor;
wherein the target acceleration depends on an amplified difference in speed with respect to the vehicle traveling ahead, wherein the amplification of the difference in speed with respect to the vehicle traveling ahead depends on the amplification factor, and/or the target acceleration is a function of the ascertained difference in speed and the amplification factor.

13. Device (3) for controlling longitudinal dynamics of a motor vehicle (1), in particular a commercial vehicle, with
at least one first sensing device (6) for ascertaining the state of at least one wheel brake (4a, 4b, 4c, 4d);
a second sensing device (8) for ascertaining information about a vehicle traveling ahead (2), and
an evaluating, setting and controlling unit (10) for evaluating the state of the at least one wheel brake (4a, 4b, 4c, 4d) and for evaluating the information about the vehicle traveling ahead (2), for setting at least one control parameter, and for controlling the longitudinal dynamics of the vehicle (1) as a function of the at least one control parameter,
and wherein the evaluating, setting and controlling unit (10) has been designed to set the at least one control parameter in a manner depending on a number of overshoots and/or undershoots of a limiting value of the state of at least one wheel brake (4a, 4b, 4c, 4d) within a defined period and on the ascertained information about the vehicle traveling ahead (2).

14. Device (3) according to Claim 13,
**characterized in that** the evaluating, setting and controlling unit (10) includes a memory unit (12) and/or a counting unit (14) which has been designed to detect a number of overshoots and/or undershoots of a limiting value of the state of the wheel brake (4a, 4b, 4c, 4d) within the defined period.

15. Device (3) according to Claim 14,
**characterized in that** the evaluating, setting and controlling unit (10) has been designed to detect a period between individual, preferentially between 2, 3, 4 or 5, overshoots and/or undershoots of a limiting value of the state of the wheel brake (4a, 4b, 4c, 4d) and to ascertain overshoots of a defined time limit of the period between individual overshoots and/or undershoots of a limiting value of the state of the wheel brake (4a, 4b, 4c, 4d).

16. Motor vehicle (1) with a device (3) for controlling longitudinal dynamics according to one of Claims 13 to 15 and/or wherein the device has been set up, designed and/or constructed to implement a method according to one of Claims 1 to 12.

## Revendications

1. Procédé de régulation automatique d'une dynamique longitudinale d'un véhicule automobile, notamment d'un véhicule utilitaire, comprenant les étapes consistant à :
- déterminer une première grandeur d'état (102) dépendant de l'état d'au moins un frein de roue ;
- détecter des dépassements et/ou des abaissements en-dessous de la première grandeur d'état (112) ;
- déterminer des informations concernant un véhicule précédent (104) ;
- régler au moins un paramètre de régulation de la régulation (120) ; et
- réguler la dynamique longitudinale du véhicule en fonction de l'au moins un paramètre de régulation (130) ; et
dans lequel le réglage de l'au moins un paramètre de régulation de la régulation (120) dépend d'une détection d'un nombre de dépassements et/ou d'abaissements en-dessous de valeurs limites de la première grandeur d'état au cours d'un intervalle de temps défini (114) et des informations déterminées concernant le véhicule précédent.

2. Procédé selon la revendication 1,
**caractérisé en ce que** le réglage de l'au moins un paramètre de régulation de la régulation dépend de la détection de 2, 3, 4 ou 5 dépassements et/ou abaissements en-dessous de valeurs limites de la première grandeur d'état au cours d'un intervalle de temps compris entre 15 et 12 secondes, de préférence, de 60 secondes ou de moins de 60 secondes, et des informations déterminées concernant le véhicule précédent.

3. Procédé selon la revendication 1 ou 2,
**caractérisé en ce que** la détection d'un nombre de dépassements et/ou d'abaissements en-dessous de valeurs limites de la première grandeur d'état au cours de l'intervalle de temps défini s'effectue au moyen d'une évaluation d'un historique mémorisé de la première grandeur d'état.

4. Procédé selon la revendication 1 ou 2,
**caractérisé en ce que** la détection d'un nombre de dépassements et/ou d'abaissements en-dessous de valeurs limites de la première grandeur d'état au cours de l'intervalle de temps défini s'effectue au moyen d'une unité de comptage qui génère un signal lorsque le nombre de dépassements et/ou d'abaissements en-dessous de valeurs limites de la première grandeur d'état au cours de l'intervalle de temps défini est atteint et/ou qui se remet à zéro lorsqu'aucun dépassement et/ou aucun abaissement en-dessous de valeurs limites de la première grandeur d'état au cours d'un intervalle de temps défini ne se produit après un dépassement et/ou un abaissement précédent en-dessous de valeurs limites de la première grandeur d'état.

5. Procédé selon l'une quelconque des revendications précédentes,
**caractérisé par** les étapes consistant à :
- détecter au moins un intervalle de temps entre des dépassements et/ou des abaissements individuels en-dessous de valeurs limites de la première grandeur d'état (110), de préférence entre 2, 3, 4 ou 5 de ceux-ci ; et
- déterminer des dépassements d'un temps limite défini de l'au moins un intervalle de temps entre des dépassements et/ou des abaissements en-dessous de valeurs limites de la première grandeur d'état (116) ;
dans lequel le réglage de l'au moins un paramètre de régulation de la régulation (120) dépend également des dépassements du temps limite défini de l'au moins un intervalle de temps entre les dépassements et/ou les abaissements en-dessous de valeurs limites de la première grandeur d'état.

6. Procédé selon l'une quelconque des revendications précédentes,
**caractérisé en ce que** la détermination d'informations concernant un véhicule précédent comporte la détermination de la vitesse et/ou de l'accélération du véhicule précédent et/ou la détermination de la distance réelle par rapport au véhicule précédent.

7. Procédé selon l'une quelconque des revendications précédentes,
**caractérisé en ce que** la détermination de la première grandeur d'état dépendant de l'état d'au moins un frein de roue comprend la détermination d'une pression de freinage, d'un couple de freinage, d'une force de freinage, d'une accélération du véhicule et/ou d'une vitesse du véhicule et/ou **en ce que** la première grandeur d'état est la pression de freinage, le couple de freinage, la force de freinage, l'accélération du véhicule et/ou la vitesse du véhicule.

8. Procédé selon l'une quelconque des revendications précédentes, notamment selon l'une quelconque des revendications 5 à 7,
**caractérisé par** l'étape consistant à :
- déduire des informations concernant l'état d'inclinaison du véhicule en fonction de la première grandeur d'état, notamment en fonction des dépassements et/ou des abaissements en-dessous de valeurs limites de la première grandeur d'état et/ou des dépassements du temps limite défini des intervalles de temps entre les dépassements et/ou les abaissements individuels en-dessous de valeurs limites de la première grandeur d'état (122).

9. Procédé selon l'une quelconque des revendications précédentes,
**caractérisé en ce que** le paramètre de régulation augmente et/ou diminue en fonction des informations déterminées concernant le véhicule précédent et de la détection d'un nombre de dépassements et/ou d'abaissements en-dessous de valeurs limites de la première grandeur d'état au cours de l'intervalle de temps défini et/ou des dépassements du temps limite défini des intervalles de temps entre les dépassements et/ou les abaissements individuels en-dessous de valeurs limites de la première grandeur d'état.

10. Procédé selon la revendication 9,
**caractérisé en ce que** le paramètre de régulation ne dépasse pas une valeur maximale et/ou ne s'abaisse pas en-dessous d'une valeur minimale et **en ce qu'**il reste de préférence constant, une fois la valeur maximale et/ou la valeur minimale atteinte, lorsque la distance théorique par rapport au véhicule précédent est supérieure à la distance réelle par rapport au véhicule précédent et lorsqu'un nombre de dépassements et/ou d'abaissements en-dessous de valeurs limites de la première grandeur d'état au cours de l'intervalle de temps défini est détecté et/ou lorsque des dépassements du temps limite défini des intervalles de temps entre les dépassements et/ou les abaissements individuels en-dessous de valeurs limites de la première grandeur d'état sont présents.

11. Procédé selon la revendication 9 ou la revendication 10,
**caractérisé en ce que** le paramètre de régulation augmente et/ou diminue linéairement, non linéairement et/ou selon une fonction définie, lorsqu'un nombre de dépassements et/ou d'abaissements en-dessous de valeurs limites de la première grandeur d'état au cours de l'intervalle de temps défini est détecté et lorsque la distance théorique par rapport au véhicule précédent est supérieure à la distance réelle par rapport au véhicule précédent et/ou lorsque des dépassements du temps limite défini des intervalles de temps entre les dépassements et/ou les abaissements individuels en-dessous de valeurs limites de la première grandeur d'état sont présents.

12. Procédé selon l'une quelconque des revendications 9 à 11,
dans lequel l'au moins un paramètre de régulation de la régulation est un facteur d'amplification et comprenant les étapes consistant à :
- déterminer une différence de vitesse par rapport au véhicule précédent,
- régler un facteur d'amplification ; et
- déterminer une accélération théorique du véhicule en fonction de la différence de vitesse déterminée par rapport au véhicule précédent et du facteur d'amplification réglé ;
dans lequel l'accélération théorique dépend d'une différence de vitesse amplifiée par rapport au véhicule précédent, dans lequel l'amplification de la différence de vitesse par rapport au véhicule précédent dépend du facteur d'amplification et/ou dans lequel l'accélération théorique est une fonction de la différence de vitesse déterminée et du facteur d'amplification.

13. Dispositif (3) de régulation d'une dynamique longitudinale d'un véhicule automobile (1), notamment d'un véhicule utilitaire, comprenant :
au moins un premier équipement de détection (6) destiné à déterminer l'état d'au moins un frein de roue (4a, 4b, 4c, 4d) ;
un deuxième équipement de détection (8) destiné à déterminer des informations concernant un véhicule précédent (2), et
une unité d'évaluation, de réglage et de régulation (10) destinée à évaluer l'état de l'au moins un frein de roue (4a, 4b, 4c, 4d) et les informations concernant le véhicule précédent (2), à régler au moins un paramètre de régulation et à réguler la dynamique longitudinale du véhicule (1) en fonction de l'au moins un paramètre de régulation, et
dans lequel l'unité d'évaluation, de réglage et de régulation (10) est conçue pour régler l'au moins un paramètre de régulation en fonction d'un nombre de dépassements et/ou d'abaissements en-dessous de valeurs limites de l'état d'au moins un frein de roue (4a, 4b, 4c, 4d) au cours de l'intervalle de temps défini et des informations concernant le véhicule précédent (2).

14. Dispositif (3) selon la revendication 13,
**caractérisé en ce que** l'unité d'évaluation, de réglage et de régulation (10) comprend une unité à mémoire (12) et/ou une unité de comptage (14) qui est conçue pour détecter un nombre de dépassements et/ou d'abaissements en-dessous de valeurs limites de l'état du frein de roue (4a, 4b, 4c, 4d) au cours de l'intervalle de temps défini.

15. Dispositif (3) selon la revendication 14,
**caractérisé en ce que** l'unité d'évaluation, de réglage et de régulation (10) est conçue pour détecter un intervalle de temps entre des dépassements et/ou des abaissements individuels en-dessous de valeurs limites de la première grandeur d'état (110), de préférence entre 2, 3, 4 ou 5 de ceux-ci, et pour déterminer des dépassements d'un temps limite défini de l'intervalle de temps entre des dépassements et/ou des abaissements individuels en-dessous de valeurs limites de l'état du frein de roue (4a, 4b, 4c, 4d).

16. Véhicule automobile (1) comprenant un dispositif (3) de régulation d'une dynamique longitudinale selon l'une quelconque des revendications 13 à 15 et/ou dans lequel le dispositif est conçu, configuré et/ou construit de manière à mettre en oeuvre un procédé selon l'une quelconque des revendications 1 à 12.
